# EUROPÄISCHE PATENTSCHRIFT

(11) **EP 2 663 217 B1**
(45) Veröffentlichungstag und Bekanntmachung des Hinweises auf die Patenterteilung: **11.03.2015**
(21) Anmeldenummer: 12700923.1
(22) Anmeldetag: 09.01.2012
(51) Int. Cl.: A47J 43/18, A47J 37/06

(54) **VORRICHTUNG ZUM HALTEN MEHRERER ZUZUBEREITENDER FISCHE UND FISCHZUBEREITUNGSVERFAHREN**
DEVICE FOR HOLDING A NUMBER OF FISH TO BE PREPARED AND FISH PREPARATION METHOD
DISPOSITIF POUR MAINTENIR PLUSIEURS POISSONS À PRÉPARER ET PROCÉDÉ DE PRÉPARATION DE POISSONS

(30) Priorität: 14.01.2011 DE 102011008647
(43) Veröffentlichungstag der Anmeldung: 20.11.2013
(73) Patentinhaber: Glas, Konrad, 82343 Possenhofen (DE)
(72) Erfinder: Glas, Konrad, 82343 Possenhofen (DE)
(74) Vertreter: Grättinger Möhring von Poschinger Patentanwälte Partnerschaft
(86) Internationale Anmeldenummer: PCT/EP2012/000060
(87) Internationale Veröffentlichungsnummer: WO 2012/042066

(56) Entgegenhaltungen:
- DE-A1- 4 127 618
- DE-A1-102005 014 738
- DE-U1-202010 014 465

## Beschreibung

Die vorliegende Erfindung betrifft eine Vorrichtung zum Halten mehrerer zuzubereitender Fische in einer Orientierung, in welcher die Bauchseite der Fische nach oben weist, wobei die Vorrichtung eine auf einer horizontalen Oberfläche aufstellbare und/oder mittels eines an der Vorrichtung angeordneten Aufhängemittels an einer Haltestruktur aufhängbare Grundstruktur aufweist, sowie ein Verfahren zur Zubereitung eines Fisches.

Eine solche Vorrichtung ist bereits aus der WO 2009/065624 A1 bekannt. Bei der dort gezeigten Vorrichtung, welche eine käfigartige Struktur zum Ablegen der Vorrichtung auf einem Grillgerät oder einer sonstigen im Wesentlichen ebenen Ablagefläche aufweist, sind über die Länge der Vorrichtung für jeden damit zuzubereitenden Fisch eine Mehrzahl an doppelspießartigen Halteelementen vorgesehen, auf welche der zuzubereitende Fisch mit seiner geöffneten Bauchseite von oben aufgespießt wird. Jedes doppelspießartige Halteelement weist dabei einen unterhalb von dessen spitzen Enden verlaufenden Quersteg auf, dem das Rückgrat des aufgespießten Fisches zur Auflage kommt. Der Vorrichtung sind ferner eine Mehrzahl an separaten Querspießen zugeordnet, die oberhalb des Rückgrats des auf die jeweiligen Haltelemente aufgespießten Fisches quer (d. h. von einer Seitenflanke des Fisches zur anderen) durch dessen Körper gebohrt und in dieser Lage in ihnen zugeordneten Führungsmitteln der käfigartigen Struktur gehalten werden können. Die käfigartige Struktur ist dabei so ausgestaltet, dass sie - ohne dass der Fisch bzw. mehrere nebeneinander angeordnete Fische die Oberfläche berühren - in verschiedenen Orientierungen auf der Oberfläche abgelegt werden kann, wobei insbesondere auch eine solche Orientierung erlaubt ist, in welcher die Fische mit ihrer Bauchseite nach oben weisen. Diese Orientierung des Fisches hat bei dessen Zubereitung (z. B. auf einem Grill oder in einem Backofen) den Vorteil, dass die sich während des Zubereitungsvorgangs in der geöffneten Bauchhöhle des Fisches ansammelnde Flüssigkeit nicht durch die geöffnete Bauchseite herauslaufen oder heraustropfen kann, wodurch ein qualitativ hochwertiges Zubereitungsergebnis erzielt wird. Von Vorteil ist ferner, dass jeder Fisch bei dieser Vorrichtung ausschließlich von den ihn durchbohrenden Querspießen und den doppelspießartigen Halteelementen berührt wird, womit eine Beschädigung der Haut des Fisches weitgehend vermieden wird.

Die in der WO 2009/065624 A1 beschriebene Vorrichtung weist allerdings den Nachteil auf, dass sie relativ komplex aufgebaut ist und somit vergleichsweise teuer in der Herstellung ist.

Die DE 9111045 U1 offenbart ein Grillgerät mit einem seitlich aus einem Grillgerät aus- und einfahrbaren Grillgutträger zur Aufnahme von Grillgut. Der Grillgutträger ist entweder aufklappbar oder weist vertikal übereinander angeordnete mulden-, krallen- oder klammerförmige Halterungen auf, die einseitig am Grillgutträger angeordnet sind. Zur Zubereitung von Fischen wird der aufklappbare Grillgutträger empfohlen. Eine platzsparende Aufnahme einer Mehrzahl an Fischen, insbesondere wenn diese, wie dies vorliegend beabsichtigt ist, in einem separaten Zubereitungsgerät zubereitet werden, ist damit nicht möglich.

Die DE 20 2010 014 465 U1 zeigt ein weiteres Grillgerät für Fische.

Vor diesem Hintergrund ist es die Aufgabe der vorliegenden Erfindung eine neuartige Vorrichtung zum Halten von Fischen herzustellen, welche bei möglichst einfachem und platzsparendem Aufbau die Halterung einer Mehrzahl an Fischen in einer Orientierung gestattet, in welcher die Bauchseite des jeweiligen Fisches zum Zwecke der Erzielung eines optimalen Zubereitungsergebnisses nach oben weist. Ferner soll ein hierzu korrespondierendes Verfahren zur Zubereitung eines Fisches bereitgestellt werden, mit welchem mit möglichst geringem Aufwand ein optimales Zubereitungsergebnis erzielbar ist.

Die vorstehende Aufgabe wird bei einer Vorrichtung der eingangs genannten Art erfindungsgemäß dadurch gelöst, dass die Vorrichtung für jeden mit der Vorrichtung zu haltenden Fisch eine Mehrzahl an parallel zueinander orientierten Spießen aufweist, die von der Grundstruktur mit einem freien Ende derart hervorstehen, dass ein über die freien Enden der ihm zugeordneten Spieße durch seine Seitenflanken hindurch aufgespießter Fisch an der Vorrichtung mit nach oben weisender Bauchseite und dabei ausschließlich von den dem Fisch zugeordneten Spießen berührt gehalten werden kann und dass eine erste Mehrzahl an Spießen zum Halten eines ersten Fisches und eine zweite Mehrzahl an Spießen zum Halten eines zweiten Fisches von einander abgewandten Seiten der Grundstruktur hervorstehen.

Im Rahmen der vorliegenden Erfindung ist also vorgesehen, dass mehrere an der Vorrichtung zum Zwecke ihrer Zubereitung zu haltende Fische in Rückenlage, d. h. mit nach oben weisender Bauchseite gehalten werden können. Hierzu sind an der erfindungsgemäßen Fischhaltevorrichtung jedem Fisch in besonders einfach zu realisierender Weise eine Mehrzahl an parallel zueinander verlaufenden Spießen vorgesehen, die lagerecht zur Grundstruktur davon mit jeweils einem freien Ende - bevorzugt jeweils gleich weit - hervorstehen, so dass der zuzubereitende Fisch in besonders einfacher Weise gleichzeitig auf sämtliche ihm zugeordneten Spieße aufgesteckt werden kann.

Ersichtlich handelt es sich bei den hierzu an der Vorrichtung vorgesehenen Spießen bevorzugt um Abschnitte eines Edelstahldrahtes (mit z. B. 2, 3, 4 oder 5 mm Durchmesser), die an ihrem freien Ende angespitzt sind, um den Fisch in möglichst einfacher Weise auf die ihm zugeordneten Spieße durch seine Seitenflanken hindurch aufzuspießen. Die spitzen Enden der jeweils einem Fisch zugeordneten Spieße liegen bevorzugt allesamt auf einer senkrecht zur Erstreckung der Spieße verlaufenden Gerade durch den Raum, die entweder (leicht) geneigt zur Horizontalen oder aber parallel hierzu verlaufen kann. In letzterem Fall sind alle einem Fisch zugeordneten Spieße vorteilhaft in etwa auf gleicher Höhe an der Grundstruktur angeordnet, so dass der darauf mit der Bauchseite nach oben aufgespießte Fisch mit seiner Längsachse eine in etwa horizontale Lage einnimmt.

Als besonders vorteilhaft erweist es sich, dass ein Fisch an einer erfindungsgemäßen Vorrichtung derart auf die ihm zugeordneten Spieße aufgesteckt werden kann, dass sein Rückgrat - in der beschriebenen Raumlage, in welcher die Bauchseite des Fisches nach oben weist - von den den Fisch haltenden Spießen nach unten abgestützt wird. Bei einer Zubereitung des Fisches, welche z. B. in einem Backofen, in einem Räucherofen, in einem Dampfkonvektomaten. Dampfgarer, Kombidämpfer, Grillgerät (bevorzugt mit Deckel), Smoker, Friteuse, Sudtopf oder in einem sonstigen Zubereitungsgerät erfolgen kann, wird der Fisch also stets, auch wenn dessen Fleisch mit fortschreitender Zubereitung weich und brüchig wird, über seine Länge verteilt von einer Mehrzahl an den Fisch unterhalb des Rückgrats quer durchdringenden Spießen gestützt, so dass er stets sicher von der erfindungsgemäßen Vorrichtung gehalten ist.

Dadurch dass der Fisch bei dem Zubereitungsvorgang erfindungsgemäß nur von den ihn durchbohrenden Spießen gehalten und berührt ist, kann ein optisch ansprechendes Zubereitungsergebnis erzielt werden, da etwaige Beschädigungen seiner Haut auf ein Mindestmaß reduziert werden können. Die anspruchsgemäß mit einfachen Mitteln erzielbare Halterung des Fisches mit nach oben weisender Bauchseite verhindert ein Austreten der sich während der Zubereitung des Fisches in dessen Bauchhöhle ansammelnden Flüssigkeit.

Die einem jeden Fisch zugeordneten Spieße sind bevorzugt mit jeweils gleichem Abstand untereinander angeordnet, so dass der Fisch an verschiedenen, über seine Länge gleich verteilten Stellen von den Spießen - unterhalb seines Rückgrats - gehalten werden kann. Bevorzugt sind hierzu wenigstens zwei, nochmals vorteilhaft jedoch drei oder vier Spieße zum Halten jedes Fisches vorgesehen. Auch die Anordnung einer noch größeren Anzahl an Spießen für jeden mit einer erfindungsgemäßen Vorrichtung zu haltenden Fisch ist im Rahmen der vorliegenden Erfindung nicht ausgeschlossen.

Die erfindungsgemäße Vorrichtung ist zum Halten einer Mehrzahl an Fischen eingerichtet. Hierzu sind für jeden zu haltenden Fisch eine geeignete Mehrzahl an Spießen an der Vorrichtung ausgebildet, so dass jeder Fisch mittels der ihm zugeordneten Spieße in der vorstehend erläuterten Art und Weise an der Vorrichtung gehalten werden kann.

Dabei ist im Rahmen der vorliegenden Erfindung vorgesehen, dass eine erste Mehrzahl an Spießen zum Halten eines ersten Fisches und eine zweite Mehrzahl an Spießen zum Halten eines zweiten Fisches in erfindungsgemäßer Art und Weise von einander abgewandten (insbesondere gegenüberliegenden) Seiten der Grundstruktur hervorstehen, was eine besonders kompakte und platzsparende Ausgestaltung der erfindungsgemäßen Vorrichtung, die wenigstens zwei Fische tragen soll, erlaubt.

Ferner ist es im Rahmen der Erfindung von Vorteil, wenn zusätzlich zur ersten oder zweiten Mehrzahl an Spießen zum Halten eines ersten oder zweiten Fisches wenigstens eine weitere Mehrzahl an Spießen zum Halten eines weiteren Fisches vorgesehen ist, die auf der gleichen Seite der Grundstruktur, jedoch oberhalb der ersten oder zweiten Mehrzahl an Spießen angeordnet ist. Hierdurch lassen sich mehrere Fische übereinander an der Vorrichtung in der gewünschten Rückenlage halten, was sich insbesondere zur Verwendung der vorliegenden Erfindung in Dampfkonvektomaten, auf dem Umluftprinzip arbeitenden Backöfen etc. anbietet.

Weiterhin kann vorteilhaft vorgesehen sein, dass bei bestimmungsgemäßer Aufstellung bzw. Aufhängung der Vorrichtung sämtliche von der Grundstruktur hervorstehenden Spieße sich in horizontaler Richtung erstrecken oder jeweils mit ihrem freien Ende - bezogen auf die Horizontale - schräg nach oben weisen. Der an der Vorrichtung gehaltene Fisch kann somit während seiner Zubereitung nicht über die freien Enden der ihn haltenden Spieße abrutschen.

Ferner erweist es sich als zweckmäßig, wenn an der Grundstruktur der Vorrichtung wenigstens eine Tragstruktur abnehmbar befestigt ist, wobei sämtliche zum Aufspießen je eines Fisches bestimmten Spieße lagefest an der gleichen Tragstruktur befestigt oder Teil derselben sind. Dies hat den Vorteil, dass die Spieße mitsamt der Tragstruktur von der Grundstruktur abgenommen werden können, was sich insbesondere zum einfacheren Aufspießen eines Fisches auf die in paralleler Orientierung an der Tragstruktur lagefest angeordneten Spieße anbietet. Anschließend kann die Tragstruktur samt Spießen und daran aufgespießtem Fisch wieder an der Grundstruktur befestigt, z.B. in geeignete Halteelemente an der Grundstruktur eingehängt oder eingesteckt werden, so dass der Fisch an der Vorrichtung die gewünschte Rückenlage einnimmt.

Dabei können entweder sämtliche Spieße der Vorrichtung an insgesamt einer von der Grundstruktur abnehmbaren Tragstruktur lagefest (ggfs. als integraler Bestandteil der Tragstruktur) befestigt sein oder es kann für jede Mehrzahl an Spießen, die zum Halten je eines Fisches vorgesehen sind, eine eigene Tragstruktur vorgesehen sein, an welcher die Spieße in der erfindungsgemäß verlangten Orientierung jeweils parallel zueinander befestigt sind. Von Vorteil ist in letzterem Fall, wenn dann jede Tragstruktur baugleich zu den anderen Tragstrukturen ist, so dass diese untereinander austauschbar sind. Die Grundstruktur kann dann bevorzugt rahmenartig mit geeigneten Aufstellmitteln (z.B. Standfüßen) an ihrem Fußbereich und/oder geeigneten Aufhängemitteln an ihrer Oberseite ausgestaltet sein. Auf verschiedenen Seiten der vorteilhaft eine vertikale Ebene aufspannenden rahmenartigen Struktur kann jeweils mindestens eine daran abnehmbar befestigte Tragstruktur mit hiervon geeignet (seitlich) hervorstehenden Spießen vorgesehen sein.

Eine solche Tragstruktur umfasst vorteilhaft zwei parallel verlaufende Streben, die bei bestimmungsgemäßer Befestigung der Tragstruktur an der Grundstruktur vertikal zueinander versetzt sind, wobei die zwei Streben mittels einer Mehrzahl an voneinander beabstandeten Quertraversen verbunden sind, wobei jeder Spieß durch einen abgewinkelten und an seinem freien Ende angespitzten Schenkel einer der Quertraversen gebildet ist. Bei entsprechender Ausbildung der Streben und Quertraversen aus einem Edelstahldraht können diese in einfacher Weise miteinander verschweißt sein. Zum Zwecke der Befestigung der Tragstruktur an der Grundstruktur kann vorteilhaft zumindest die obere der beiden (Längs-) Streben in geeigneten - und vorteilhaft auf gleicher Höhe befindlichen - Halteelementen an der Grundstruktur eingehängt werden.

Eine besonders zweckmäßige Ausgestaltung der vorliegenden Erfindung sieht vor, dass die Vorrichtung zum Halten von (insgesamt bzw. wenigstens) vier Fischen eingerichtet ist, wobei jedem Fisch eine separate Tragstruktur und die daran befestigte Mehrzahl an Spießen zugeordnet ist, wobei an voneinander abweisenden Seiten der Grundstruktur (wenigstens) je zwei Tragstrukturen vertikal übereinander befestigbar sind.

Ferner ist bevorzugt dafür Sorge zu tragen, dass sämtliche Spieße zum Halten je eines Fisches jeweils auf gleicher Höhe angeordnet sind, so dass die Längsachse des daran bestimmungsgemäß aufgespießten Fisches horizontal orientiert ist.

Die Tragstruktur, die Spieße und/oder der Grundkörper können vorteilhaft aus rostfreiem (Edel-)Stahl, insbesondere einem geeignet gebogenen Stahldraht hergestellt sein, wobei die Grundstruktur, insbesondere wenn diese rahmenartig aufgebaut ist, vorteilhaft aus einem lasergeschnittenen Stahlblechabschnitt hergestellt sein kann, der zu einem umlaufenden Rahmen gebogen ist und an dessen vertikalen Schenkeln mittels geeigneter Halteelemente die wenigstens eine Tragstruktur in vorgegebener Lage einhängbar ist.

Das erfindungsgemäße Verfahren zur Zubereitung eines Fisches, welches unter Verwendung einer Vorrichtung der vorbeschriebenen Art durchgeführt wird, ist gekennzeichnet durch die folgenden Schritte:
A) Aufspießen (wenigstens) eines Fisches auf die freien Enden der Mehrzahl an parallel zueinander angeordneten Spießen, wobei die Spieße durch die Seitenflanken des Fisches derart hindurch gespießt werden, dass jeder Spieß den mit seiner Bauchseite nach oben weisenden Fisch unterhalb seines Rückgrates durchdringt.
B) Zubereiten des (wenigstens einen) Fisches, während dieser an der Vorrichtung mit nach oben weisender Bauchseite gehalten ist, wobei der Fisch ausschließlich von den ihn durchdringenden Spießen berührt wird.

Bezüglich der Vorteile und bevorzugter Weiterbildungen des erfindungsgemäßen Verfahrens gelten ersichtlich alle bereits in Zusammenhang mit der erfindungsgemäßen Vorrichtung erläuterten Aspekte, so dass zur Vermeidung von Wiederholungen hierauf verwiesen wird. Die Zubereitung des wenigstens einen Fisches erfolgt indem die erfindungsgemäße Vorrichtung gemeinsam mit dem wenigstens einen daran gehaltenen Fisch in einem geeigneten Zubereitungsgerät aufgestellt oder aufgehängt wird und anschließend der wenigstens eine Fisch den zu seiner Zubereitung verwendeten Umgebungsbedingungen (z.B. Hitze, Dampf und/oder Rauch, etc.) ausgesetzt wird.

Dabei ist in Schritt (A) des erfindungsgemäßen Verfahrens dafür Sorge zu tragen, dass der Fisch derart aufgespießt wird, dass (bei bestimmungsgemäßer Aufstellung/Aufhängung der Vorrichtung) jeder Spieß den mit seiner Bauchseite nach oben weisenden Fisch unterhalb seines Rückgrates durchdringt, so dass die Spieße den Fisch in der genannten Orientierung unterhalb des Rückgrats stützen.

Nachfolgend wird ein Ausführungsbeispiel der Erfindung anhand der Zeichnung näher erläutert. Dabei zeigt:
- Fig. 1: ein Ausführungsbeispiel einer erfindungsgemäßen Vorrichtung in perspektivischer Ansicht,
- Fig. 2: die Vorrichtung aus Fig. 1 in einer Seitenansicht,
- Fig. 3: die Vorrichtung aus Fig. 1 in einer um 90° versetzten Seitenansicht und
- Fig. 4: die Vorrichtung aus Fig. 1 in Draufsicht.

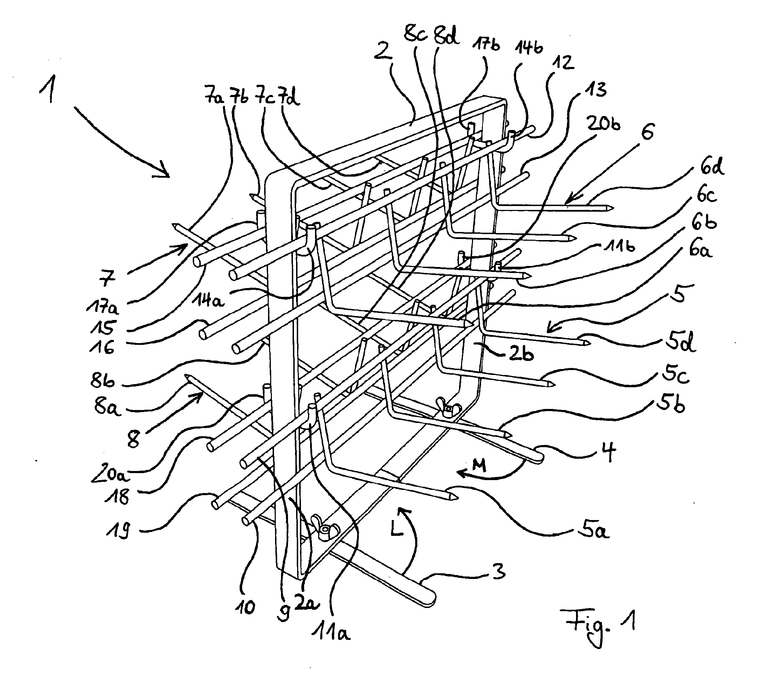

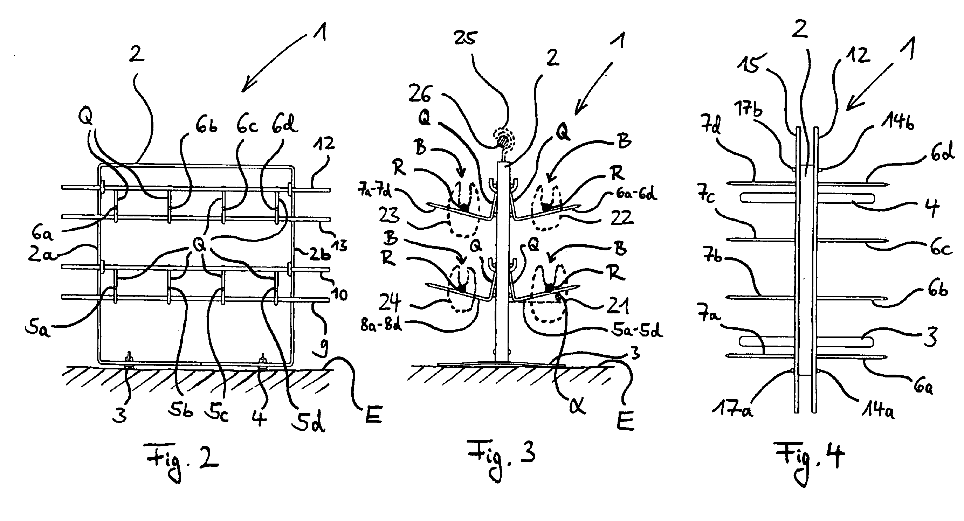

Die in den Fig. 1 - 4 dargestellte Vorrichtung 1 dient zum (gleichzeitigen) Halten von insgesamt vier zuzubereitenden Fischen 21, 22, 23, 24 (vgl. die gestrichelte Darstellung des Fischquerschnitts in Fig. 3) in einer Orientierung mit jeweils nach oben weisender Bauchseite B. Hierzu verfügt die Vorrichtung 1 über eine rahmenartig ausgestaltete Grundstruktur 2, welche mittels zweier Standfüße 3, 4 auf einer im wesentlichen horizontalen und ebenen Oberfläche E (vgl. Fig. 2 und 3) aufstellbar ist. Die Standfüße 3, 4, welche seitlich von der Grundstruktur hervorragen, um einen sicheren Stand der Vorrichtung 1 auch mit wenigstens einem daran gehaltenen Fisch sicherzustellen, sind gemäß Pfeilen L, M unter die Grundstruktur verschwenkbar, so dass die Vorrichtung platzsparend verstaut und z.B. in einer Spülmaschine gereinigt werden kann.

Zum Halten der Fische weist die Vorrichtung 1 insgesamt vier Gruppen 5, 6, 7, 8 aus jeweils vier Spießen 5a-5d, 6a-6d, 7a-7d, 8a-8d auf, welche (gruppenweise) jeweils parallel zueinander orientiert sind und mit einem freien, angespitzten Ende von der Grundstruktur 2 seitlich hervorstehen. Vorliegend sind auf jeder Seite der rahmenartigen Grundstruktur 2 jeweils zwei Gruppen 5, 6 bzw. 7, 8 aus je vier Spießen angeordnet, wobei die auf auf der gleichen Seite der Grundstruktur 2 angeordneten Gruppen jeweils vertikal übereinander positioniert sind, womit sich eine insgesamt platzsparende Anordnung ergibt.

Dabei nehmen die Spieße 5a-5d, 6a-6d, 7a-7d, 8a-8d eine unter einem Neigungswinkel α gegenüber der Horizontalen geneigte Lage ein, in welcher jeweils das freie Ende leicht geneigt nach oben weist, so dass ein auf die jeweilige Gruppe 5, 6, 7, 8 von untereinander parallelen Spießen 5a-5d, 6a-6d, 7a-7d, 8a-8d aufgespießter Fisch 21, 22, 23, 24 nicht selbsttätig über das freie Ende der Spieße 5a-5d, 6a-6d, 7a-7d, 8a-8d herunter rutschen kann. Die Fische 21 - 24 wurden auf je eine Gruppe 5, 6, 7, 8 der gruppenweise jeweils auf gleicher Höhe der Vorrichtung 1 angeordneten Spieße 5a-5d, 6a-6d, 7a-7d, 8a-8d derart aufgespießt (bzw. können in Anbetracht der hierfür geeigneten Gestaltung der Vorrichtung 1) derart aufgespießt werden, dass bei nach oben weisender Bauchseite B des jeweiligen Fisches 21 - 24 die Spieße den Fisch jeweils knapp unterhalb seines Rückgrats R quer durchdringen (vgl. Fig. 3). Die mit dem (in Fig. 3 senkrecht zur Zeichenebene orientierten) Verlauf des Rückgrats R zusammen fallende Längsachse der Fische 21-24 nimmt vorliegend eine horizontale Lage ein. Zum Zwecke der Zubereitung der Fische 21-24 wird die Vorrichtung 1 mitsamt den daran gehalten Fischen 21-24 in ein geeignetes Zubereitungsgerät gestellt.

Die Spieße 5a-5d, 6a-6d, 7a-7d, 8a-8d sind, was jedoch ebenfalls möglich wäre, nicht selbst unmittelbar an der Grundstruktur 2 der Vorrichtung 1 befestigt (oder daran ausgebildet), sondern jeweils an einer aus je zwei parallel verlaufenden Streben 9/10, 12/13, 15/16, 18/19 gebildeten Tragstruktur befestigt (bzw. Teil derselben), wobei die Tragstrukturen ihrerseits - jeweils separat - an der Grundstruktur 2 abnehmbar befestigt sind. Hierzu sind an den vertikalen Schenkeln 2a, 2b der Grundstruktur 2 für jede Tragstruktur je zwei Halteelemente 11a 11b 14a, 14b, 17a, 17b, 20a, 20b vorgesehen, in welche jeweils die obere Strebe 9, 12, 15, 18 der jeweiligen Tragstruktur eingehängt wird. Durch die Schwerkraft kommt bei der im vorliegenden Ausführungsbeispiel gegebenen Anordnung dann die jeweils untere Strebe 10, 13, 16, 19 der jeweiligen Tragstruktur ebenfalls zur Anlage an den beiden vertikalen Schenkeln 2a, 2b der Grundstruktur 2, womit die Relativlage der bestimmungsgemäß an der Grundstruktur 2 (durch Einhängen) befestigten Tragstruktur und damit auch die Relativlage der von der Grundstruktur 2 mit ihrem freien Ende hervorstehenden Spieße 5a-5d, 6a-6d, 7a-7d, 8a-8d zur Grundstruktur 2 lagerecht vorgeben ist. Jeder Spieß 5a-5d, 6a-6d, 7a-7d, 8a-8d stellt einen abgewinkelten Schenkel einer Quertraverse Q (vgl. Fig. 3) dar, der die beiden Streben 9/10, 12/13, 15/16, 18/19 einer jeden Tragstruktur verbindet. Die Spieße 5a-5d, 6a-6d, 7a-7d, 8a-8d sind im Bereich der jeweiligen Quertraverse Q mit den beiden Streben 9/10, 12/13, 15/16, 18/19 der jeweiligen Tragstruktur verschweißt.

In Fig. 3 ist an der Oberseite der rahmenartigen Grundstruktur 2 ergänzend und in gestrichelter Darstellung noch ein (in den übrigen Figuren nicht gezeigtes) Aufhängemittel 25 in Art eines (über die Länge ggfs. mehrfach vorhandenen Hakens) gezeigt, welches fakultativ vorgesehen sein kann, damit die Vorrichtung 1 z.B. an einer geeigneten Haltestruktur (z.B. einer horizontal verlaufenden Stange 26) beispielsweise in einem Räucherofen etc. aufgehängt werden kann, falls darin keine geeignete Standfläche E zum Aufstellen der Vorrichtung 1 vorhanden ist.

## Patentansprüche

1. Vorrichtung (1) zum Halten mehrerer zuzubereitender Fische (21-24) in einer Orientierung, in welcher die Bauchseite (B) der Fische (21-24) nach oben weist,
wobei die Vorrichtung (1) eine auf einer horizontalen Oberfläche (E) aufstellbare und/oder mittels eines an der Vorrichtung (1) angeordneten Aufhängemittels (25) an einer Haltestruktur (26) aufhängbare Grundstruktur (2) aufweist,
wobei die Vorrichtung (1) für jeden mit der Vorrichtung (1) zu haltenden Fisch (21-24) eine Mehrzahl an parallel zueinander orientierten Spießen (5a-5d, 6a-6d, 7a-7d, 8a-8d) aufweist, die von der Grundstruktur (2) mit einem freien Ende derart hervorstehen,
dass ein über die freien Enden der ihm zugeordneten Spieße (5a-5d, 6a-6d, 7a-7d, 8a-8d) durch seine Seitenflanken hindurch aufgespießter Fisch (21-24) an der Vorrichtung (1) mit nach oben weisender Bauchseite (B) und dabei ausschließlich von den dem Fisch (21-24) zugeordneten Spießen (5a-5d, 6a-6d, 7a-7d, 8a-8d) berührt gehalten werden kann und wobei eine erste Mehrzahl (5a-5d) an Spießen zum Halten eines ersten Fisches (21) und eine zweite Mehrzahl an Spießen (8a-8d) zum Halten eines zweiten Fisches (24) von einander abgewandten Seiten der Grundstruktur (2) hervorstehen.

2. Vorrichtung nach Anspruch 1,
**dadurch gekennzeichnet,**
**dass** zusätzlich zur ersten oder zweiten Mehrzahl an Spießen (5a-5d; 8a-8d) zum Halten eines ersten oder zweiten Fisches (21;24) wenigstens eine weitere Mehrzahl an Spießen (6a-6d; 7a-7d) zum Halten eines weiteren Fisches (22;23) vorgesehen ist, die auf der gleichen Seite der Grundstruktur, jedoch oberhalb der ersten oder zweiten Mehrzahl an Spießen (5a-5d; 8a-8d) angeordnet ist.

3. Vorrichtung nach einem der vorangehenden Ansprüche,
**dadurch gekennzeichnet,**
**dass** bei bestimmungsgemäßer Aufstellung bzw. Aufhängung der Vorrichtung (1) sämtliche von der Grundstruktur (2) hervorstehenden Spieße (5a-5d, 6a-6d, 7a-7d, 8a-8d) sich in horizontaler Richtung erstrecken oder jeweils mit ihrem freien Ende - bezogen auf die Horizontale - schräg (Winkel α) nach oben weisen.

4. Vorrichtung nach einem der vorangehenden Ansprüche,
**dadurch gekennzeichnet,**
**dass** an der Grundstruktur (2) der Vorrichtung (1) wenigstens eine Tragstruktur (9/10, 12/13, 15/16, 18/19; Q; 5a-5d, 6a-6d, 7a-7d, 8a-8d) abnehmbar befestigt ist, wobei sämtliche zum Aufspießen je eines Fisches bestimmten Spieße (5a-5d, 6a-6d, 7a-7d, 8a-8d) lagefest an der gleichen Tragstruktur (9/10, 12/13, 15/16, 18/19; Q; 5a-5d, 6a-6d, 7a-7d, 8a-8d) befestigt sind oder Teil derselben sind.

5. Vorrichtung nach Anspruch 4,
**dadurch gekennzeichnet,**
**dass** die wenigstens eine Tragstruktur zwei parallel verlaufende Streben (9/10, 12/13, 15/16, 18/19) aufweist, die bei bestimmungsgemäßer Befestigung der Tragstruktur an der Grundstruktur (2) vertikal zueinander versetzt sind, wobei die zwei Streben (9/10, 12/13, 15/16, 18/19) mittels einer Mehrzahl an voneinander beabstandeten Quertraversen (Q) verbunden sind, wobei jeder Spieß (5a-5d, 6a-6d, 7a-7d, 8a-8d) durch einen abgewinkelten und an seinem freien Ende angespitzten Schenkel einer der Quertraversen (Q) gebildet ist.

6. Vorrichtung nach Anspruch 4 oder 5,
**dadurch gekennzeichnet,**
**dass** die Vorrichtung (1) zum Halten von vier Fischen (21-24) eingerichtet ist, wobei jedem Fisch (21-24) eine separate Tragstruktur und die daran befestigte Mehrzahl an Spießen (5a-5d, 6a-6d, 7a-7d, 8a-8d) zugeordnet ist, wobei an voneinander abweisenden Seiten der Grundstruktur (2) je zwei Tragstrukturen vertikal übereinander befestigbar sind.

7. Vorrichtung nach einem der vorangehenden Ansprüche,
**dadurch gekennzeichnet,**
**dass** sämtliche Spieße (5a-5d, 6a-6d, 7a-7d, 8a-8d) zum Halten je eines Fisches (21-24) jeweils auf gleicher Höhe angeordnet sind, so dass die Längsachse des daran bestimmungsgemäß aufgespießten Fisches (21-24) horizontal orientiert ist.

8. Vorrichtung nach einem der vorangehenden Ansprüche,
**dadurch gekennzeichnet,**
**dass** jedem an der Vorrichtung (1) zu haltenden Fisch (21-24) drei oder vier Spieße (5a-5d, 6a-6d, 7a-7d, 8a-8d) zugeordnet sind.

9. Vorrichtung nach einem der vorangehenden Ansprüche,
**dadurch gekennzeichnet,**
**dass** die Tragstruktur, die Spieße (5a-5d, 6a-6d, 7a-7d, 8a-8d) und/oder der Grundkörper (2) aus rostfreiem Stahl, insbesondere einem geeignet gebogenen Stahldraht hergestellt sind.

10. Verfahren zur Zubereitung eines Fisches unter Verwendung einer Vorrichtung (1) nach einem der vorangehenden Ansprüche **gekennzeichnet durch** die folgenden Schritte:
A) Aufspießen eines Fisches (21-24) auf die freien Enden der Mehrzahl an parallel zueinander angeordneten Spießen (5a-5d, 6a-6d, 7a-7d, 8a-8d), wobei die Spieße (5a-5d, 6a-6d, 7a-7d, 8a-8d) **durch** die Seitenflanken des Fisches (21-24) derart hindurch gespießt werden, dass jeder Spieß (5a-5d, 6a-6d, 7a-7d, 8a-8d) den mit seiner Bauchseite (B) nach oben weisenden Fisch (21-24) unterhalb seines Rückgrates (R) durchdringt
B) Zubereiten des Fisches (21-24), während dieser an der Vorrichtung (1) mit nach oben weisender Bauchseite (B) gehalten ist, wobei der Fisch (21-24) ausschließlich von den ihn durchdringenden Spießen (5a-5d, 6a-6d, 7a-7d, 8a-8d) berührt wird.

## Claims

1. A device (1) for holding a number of fish (21-24) to be prepared in a position in which the stomach side (B) of the fish (21-24) points upwards,
whereby the device (1) has a basic structure (2) which can be positioned on a horizontal surface (E) and/or suspended from a holding structure (26) by means of a suspension provision (25) arranged on the device (1),
the device (1) further comprising multiple spikes (5a-5d, 6a-6d, 7a-7d, 8a-8d) for each fish (21-24) to be held by the device (1) that are in a parallel position to one another, the spikes (5a-5d, 6a-6d, 7a-7d, 8a-8d) projecting from the basic structure (2) with a free end in such a way that each of the fish (21-24), which is skewered in supine position via the free ends through its side flanks, is thus exclusively in contact with the spikes (5a-5d, 6a-6d, 7a-7d, 8a-8d) assigned to each fish (21-24), and such that a first grouping of spikes (5a-5d) project out in order to hold a first fish (21) of the number of fish (21-24), and a second grouping of spikes (8a-8d) to hold a second fish (24) of the number of fish (21-24) at the basic structure (2), on the two sides facing away from each other.

2. The device of claim 1, **characterized in that** in addition to the first and second groupings of spikes (5a-5d;8a-8d) for the purpose of holding a first or second fish, at least one further grouping of spikes (6a-6d; 7a-7d) for the purpose of holding an additional fish is provided, which are located on the same side of the basic structure, though above the first or second grouping of spikes (5a-5d; 8a-8d).

3. The device of one of the preceding claims, **characterized in that**
with proper mounting, such as a suspension of the device (1), the various spikes (5a-5d, 6a-6d, 7a-7d, 8a-8d) extend horizontally from the basic structure (2) or point diagonally (at an angle α) upwards in relation to the horizontal.

4. The device of one of the preceding claims, **characterized in that**
at the basic structure (2) of the device (1), at least one support structure (9/10, 12/13, 15/16, 18/19; Q; 5a-5d, 6a-6d, 7a-7d, 8a-8d) is attached in a removable fashion, whereby the spikes (5a-5d, 6a-6d, 7a-7d, 8a-8d) to be used to skewer the respective fish (21-24) are fixedly attached to, or part of, the same support structure (9/10, 12/13, 15/16, 18/19; Q; 5a-5d, 6a-6d, 7a-7d, 8a-8d).

5. The device of claim 4,
**characterized in that**
the at least one support structure has two parallel running braces (9/10, 12/13, 15/16, 18/19), which with proper attachment of the support structure to the basic structure (2), are vertically positioned relative to one another, whereby the two braces (9/10, 12/13, 15/16, 18/19) are connected by a number of crossbeams (Q), spaced apart from each other, whereby each spike (5a-5d, 6a-6d, 7a-7d, 8a-8d) is formed by a bent limb pointed at its tip, located on one of the crossbeams (Q).

6. The device of claim 4 or claim 5,
**characterized in that**
the device (1) is designed to hold four fish (21-24), and whereby each fish (21-24) is assigned a separate support structure and the grouping of spikes (5a-5d, 6a-6d, 7a-7d, 8a-8d) attached thereto, and whereby two support structures each are vertically attachable one above the other, on the sides of the basic structure (2), facing away from one another.

7. The device of one of the preceding claims,
**characterized in that**
the various spikes (5a-5d, 6a-6d, 7a-7d, 8a-8d) for holding the respective fish (21-24) are each arranged at the same height so that the longitudinal axis of the fish (21-24) properly skewered to it is horizontally positioned.

8. The device of one of the preceding claims,
**characterized in that**
each fish (21-24) to be held by the device (1) is assigned three or four spikes (5a-5d, 6a-6d, 7a-7d, 8a-8d).

9. The device of one of the preceding claims,
**characterized in that**
the support structure, the spikes (5a-5d, 6a-6d, 7a-7d, 8a-8d) and the base body (2) are manufactured of stainless steel, specifically of a suitably bent steel wire.

10. A method for the preparation of a fish using the device (1) of any of the preceding claims, comprising the following steps:
(A) skewering a fish (21-24) onto the free ends of a number of parallel running spikes (5a-5d, 6a-6d, 7a-7d, 8a-8d) through the side flanks of the fish (21-24) in such a way that each spike (5a-5d, 6a-6d, 7a-7d, 8a-8d) pierces the fish held in supine position underneath its spine (R); and
(B) preparing the fish (21-24) while it is held on the device in a supine position, whereby the fish is exclusively in contact with the spikes (5a-5d, 6a-6d, 7a-7d, 8a-8d) piercing through it.

## Revendications

1. Dispositif (1) destiné à maintenir plusieurs poissons (21 à 24) à préparer dans une orientation dans laquelle le côté ventral (B) des poissons (21 à 24) est tourné vers le haut, le dispositif (1) comportant une structure de base (2) pouvant se poser sur une surface (E) horizontale et/ou s'accrocher sur une structure de maintien (26) à l'aide d'un moyen d'accrochage (25) placé sur le dispositif (1), le dispositif (1) comportant pour chaque poisson (21 à 24) qui doit être maintenu par le dispositif (1) une pluralité de brochettes (5a à 5d ; 6a à 6d, 7a à 7d, 8a à 8d) orientées à la parallèle les unes des autres, qui par une extrémité libre débordent de la structure de base (2) de telle sorte qu'un poisson (21 à 24) embroché par ses flancs latéraux par l'intermédiaire des extrémités libres des brochettes (5a à 5d ; 6a à 6d), 7a à 7d), 8a à 8d) qui lui sont associées puisse être maintenu sur le dispositif (1) avec le côté ventral (21 à 24) tourné vers le haut en étant en contact à cet effet exclusivement avec la brochette (5a à 5d ; 6a à 6d, 7a à 7d, 8a à 8d) associée au poisson (21 à 24) et une première pluralité (5a à 5d) de brochettes pour tenir un premier poisson (21) et une deuxième pluralité de brochettes (8a à 8d) pour tenir un deuxième poisson (24) débordant de côtés opposés de la structure de base (2).

2. Dispositif selon la revendication 1, **caractérisé en ce qu'**en supplément de la première ou de la deuxième pluralité de brochettes (5a à 5d ; 8a à 8d) pour tenir un premier ou un deuxième poisson (21 ; 24), il est prévu au moins une pluralité supplémentaire de brochettes (6a à 6d ; 7a à 7d) pour tenir un poisson (22 ; 23) supplémentaire qui est placée sur le même côté de la structure de base, toutefois au-dessus de la première ou de la deuxième pluralité de brochettes (5a à 5d ; 8a à 8d).

3. Dispositif selon l'une quelconque des revendications précédentes, **caractérisé en ce que** dans le cas d'une disposition ou d'un accrochage conforme du dispositif (1), l'ensemble des brochettes (5a à 5d ; 6a à 6d, 7a à 7d, 8a à 8d) débordant de la structure de base (2) s'étendent en direction horizontale ou sont dirigées chacune par leur extrémité libre en inclinaison (angle α) - par rapport à l'horizontale -.

4. Dispositif selon l'une quelconque des revendications précédentes, **caractérisé en ce que** sur la structure de base (2) du dispositif (1), au moins une structure porteuse (9/10, 12/13, 15/16, 18/19 ; Q ; 5a à 5d, 6a à 6d, 7a à 7d, 8a à 8d) est fixée de manière amovible, alors que l'ensemble des brochettes (5a à 5d ; 6a à 6d, 7a à 7d, 8a à 8d) destinées à embrocher chacune un poisson sont fixées de manière stationnaire sur la même structure porteuse (9/10, 12/13, 15/16, 18/19 ; Q ; 5a à 5d, 6a à 6d, 7a à 7d, 8a à 8d) ou sont une partie de cette dernière.

5. Dispositif selon la revendication 4, **caractérisé en ce que** l'au moins une structure porteuse comporte deux montants (9/10, 12/13, 15/16, 18/19) s'étendant à la parallèle, qui dans le cas d'une fixation conforme de la structure de base sont déportés verticalement l'un par rapport à l'autre sur la structure de base (2), les deux montants (9/10, 12/13, 15/16, 18/19) étant reliés au moyen d'une pluralité de traverses transversales (Q) écartées les unes des autres, chaque brochette (5a à 5d ; 6a à 6d, 7a à 7d, 8a à 8d) étant formée par une branche coudée et appointée sur son extrémité libre de l'une des traverses transversales (Q) .

6. Dispositif selon la revendication 4 ou la revendication 5, **caractérisé en ce que** le dispositif (1) est installé pour tenir quatre poissons (21 à 24), à chaque poisson (21 à 24) étant associée une structure porteuse séparée et la pluralité de brochettes (5a à 5d ; 6a à 6d, 7a à 7d, 8a à 8d) qui y est fixée, alors que sur des côtés opposés l'un à l'autre de la structure de base (2), chaque fois deux structures porteuses peuvent être fixées verticalement l'une au-dessus de l'autre.

7. Dispositif selon l'une quelconque des revendications précédentes, **caractérisé en ce que** l'ensemble des brochettes (5a à 5d ; 6a à 6d, 7a à 7d, 8a à 8d) destinées à maintenir chacune un poisson (21 à 24) sont chaque fois placées sur la même hauteur, de sorte que l'axe longitudinal du poisson (21 à 24) qui y est embroché de manière conforme soit orienté à l'horizontale.

8. Dispositif selon l'une quelconque des revendications précédentes, **caractérisé en ce qu'**à chaque poisson (21 à 24) qui doit être tenu sur le dispositif (1) sont associées trois ou quatre brochettes (5a à 5d ; 6a à 6d, 7a à 7d, 8a à 8d).

9. Dispositif selon, l'une quelconque des revendications précédentes, **caractérisé en ce que** la structure porteuse, les brochettes (5a à 5d ; 6a à 6d, 7a à 7d, 8a à 8d) et/ou le corps de base (2) sont fabriqués en acier inoxydable, notamment en un fil d'acier cintré adapté.

10. Procédé de préparation d'un poisson en utilisant un dispositif (1) selon l'une quelconque des revendications précédentes, **caractérisé par** les étapes suivantes :
A) Embrochage d'un poisson (21 à 24) sur les extrémités libres de la pluralité de brochettes (5a à 5d ; 6a à 6d, 7a à 7d, 8a à 8d) placées parallèlement les unes par rapport aux autres, les brochettes (5a à 5d ; 6a à 6d, 7a à 7d, 8a à 8d) étant embrochées à travers les flancs latéraux du poisson (21 à 24) de telle sorte que chaque brochette (5a à 5d ; 6a à 6d, 7a à 7d, 8a à 8d) traverse le poisson (21 à 24) tourné vers le haut à travers son côté ventral (B), en dessous de son épine dorsale (R),
B) Préparation du poisson (21 à 24) pendant que celui-ci est maintenu sur le dispositif (1) avec le côté ventral (B) tourné vers le haut, le poisson (21 à 24) étant exclusivement en contact avec les brochettes (5a à 5d ; 6a à 6d, 7a à 7d, 8a à 8d) qui le traversent.
